# EUROPÄISCHE PATENTSCHRIFT

(11) **EP 2 987 297 B1**
(45) Veröffentlichungstag und Bekanntmachung des Hinweises auf die Patenterteilung: **22.02.2017**
(21) Anmeldenummer: 14711489.6
(22) Anmeldetag: 18.03.2014
(51) Int. Cl.: H04L 29/06, H04W 12/04, H04L 29/08, G08G 1/01, G08G 1/16, H04W 12/02

(54) **KOMMUNIKATIONSVERFAHREN ZUM ÜBERTRAGEN VON NUTZDATEN SOWIE ENTSPRECHENDES KOMMUNIKATIONSSYSTEM**
COMMUNICATION METHOD FOR TRANSMITTING USEFUL DATA AND CORRESPONDING COMMUNICATION SYSTEM
PROCÉDÉ DE COMMUNICATION POUR LA TRANSMISSION DE DONNÉES UTILES ET SYSTÈME DE COMMUNICATION CORRESPONDANT

(30) Priorität: 15.04.2013 DE 102013206661
(43) Veröffentlichungstag der Anmeldung: 24.02.2016
(73) Patentinhaber: Robert Bosch GmbH, 70442 Stuttgart (DE)
(72) Erfinder: MOENNICH, Joerg, 70437 Stuttgart (DE); HAUG, Matthias, 74385 Pleidelsheim (DE)
(86) Internationale Anmeldenummer: PCT/EP2014/055359
(87) Internationale Veröffentlichungsnummer: WO 2014/170077

(56) Entgegenhaltungen:
- WO-A2-2009/158211
- DE-A1-102009 054 795
- DE-A1-102010 033 478

## Beschreibung

Die Erfindung betrifft ein Kommunikationsverfahren zum Übertragen von Nutzdaten zwischen einem ersten Verkehrsteilnehmer, wenigstens einem zweiten Verkehrsteilnehmer sowie einer zentralen Kommunkationseinrichtung. Die Erfindung betrifft weiterhin ein Kommunikationssystem.

### Stand der Technik

Aus dem Stand der Technik sind Kommunikationsverfahren bekannt, mittels welchen Nutzdaten zwischen mehreren Verkehrsteilnehmern, beispielsweise also dem ersten Verkehrsteilnehmer und dem zweiten Verkehrsteilnehmer, übertragen werden, vorzugsweise drahtlos. Derartige Verfahren werden als "Car to Car"- beziehungsweise C2C-Kommunikationsverfahren bezeichnet. Ebenfalls ist es bekannt, Nutzdaten von dem Verkehrsteilnehmer an die zentrale Kommunikationseinrichtung zu übermitteln. In diesem Fall spricht man von "Car to Infrastructure"- beziehungsweise C2I-Kommunikationsverfahren. Als Oberbegriff für diese beiden Verfahren kann der Ausdruck "Car to X"-beziehungsweise C2X-Kommunikationsverfahren verwendet werden. Beispielsweise liegen der erste Verkehrsteilnehmer und/oder der zweite Verkehrsteilnehmer jeweils als Kraftfahrzeug vor. Die zentrale Kommunikationseinrichtung ist dagegen bevorzugt stationär.

Die Datenmenge der Nutzdaten, die zwischen dem ersten und dem zweiten Verkehrsteilnehmer übertragen werden muss, nimmt ständig zu, auch weil die Anzahl der zu übertragenden Parameter und/oder die Frequenz der Übertragung stetig ansteigt. Dies gilt insbesondere, wenn eine Vielzahl von zweiten Verkehrsteilnehmern in der Umgebung des ersten Verkehrsteilnehmers vorhanden ist. In diesem Fall muss der erste Verkehrsteilnehmer die Nutzdaten zu mehreren zweiten Verkehrsteilnehmern, insbesondere allen zweiten Verkehrsteilnehmern, übertragen. Häufig ist dies über dieselbe Schnittstelle beziehungsweise dieselbe Kommunikationseinrichtung vorgesehen.

Hinzu kommt, dass die Datenübertragungsrate zwischen den beiden Verkehrsteilnehmern üblicherweise begrenzt ist, während sie zwischen dem jeweiligen Verkehrsteilnehmer und der zentralen Kommunikationseinrichtung vorzugsweise höher ist. Dies liegt auch darin begründet, dass die Kommunikationsverbindung zwischen den Verkehrsteilnehmern häufig wechselt, also beispielsweise der erste Verkehrsteilnehmer die Kommunikationsverbindung abwechselnd zu jeweils einem oder mehreren der zweiten Verkehrsteilnehmer aufbauen muss, um die Daten zu übertragen. Die Kommunikationsverbindung zwischen dem jeweiligen Verkehrsteilnehmer, also dem ersten Verkehrsteilnehmer oder dem zweiten Verkehrsteilnehmer, und der zentralen Kommunikationseinrichtung besteht im Gegensatz dazu vorzugsweise über einen längeren Zeitraum, insbesondere während eines Betriebs des jeweiligen Verkehrsteilnehmers permanent.

Weiterer Stand der Technik ist DE 10 2010 033478.

### Offenbarung der Erfindung

Das Kommunikationsverfahren mit den Merkmalen des Anspruchs 1 hat nun den Vorteil, dass die Kommunikation zwischen dem ersten Verkehrsteilnehmer, dem wenigstens einen zweiten Verkehrsteilnehmer sowie der zentralen Kommunikationseinrichtung verbessert wird. Insbesondere wird die zwischen dem ersten Verkehrsteilnehmer und dem zweiten Verkehrsteilnehmer zu übertragende Datenmenge deutlich reduziert, sodass die zur Verfügung stehende Übertragungskapazität besser ausgeschöpft werden kann. Dies wird erfindungsgemäß erreicht, indem der erste Verkehrsteilnehmer ein Datenpaket bereitstellt und an die zentrale Kommunikationseinrichtung übermittelt, wobei das Datenpaket einem wechselnden Schlüssel zugeordnet ist, der gemeinsam mit dem Datenpaket übermittelt wird, dass der erste Verkehrsteilnehmer einen Identifikator zusammen mit dem Schlüssel an den zweiten Verkehrsteilnehmer übermittelt, und dass der zweite Verkehrsteilnehmer von der zentralen Kommunikationseinrichtung unter Verwendung des Schlüssels das diesem zugeordnete Datenpaket anfordert und dem ersten Verkehrsteilnehmer zuordnet.

Es ist nun also vorgesehen, dass zumindest ein Teil der Nutzdaten in Form des Datenpakets nicht mehr unmittelbar zwischen dem ersten Verkehrsteilnehmer und dem zweiten Verkehrsteilnehmer übertragen wird, sondern vielmehr lediglich mittelbar über die zentrale Kommunikationseinrichtung. Das bedeutet, dass das Datenpaket von dem ersten Verkehrsteilnehmer an die zentrale Kommunikationseinrichtung übermittelt wird und anschließend von dieser zu dem wenigstens einen zweiten Verkehrsteilnehmer gelangt. Somit kann die vorzugsweise höhere Datenübertragungsrate zwischen dem jeweiligen Verkehrsteilnehmer und der zentralen Kommunikationseinrichtung vorteilhaft ausgenutzt werden. Auch müssen die Nutzdaten von dem ersten Verkehrsteilnehmer nicht mehr an jeden zweiten Verkehrsteilnehmer, also unter Umständen mehrfach, übertragen werden. Stattdessen erfolgt lediglich eine einzige Übertragung an die zentrale Kommunikationseinrichtung.

Ohne zusätzliche Vorkehrungen tritt nun jedoch die Problematik zutage, dass der zentralen Kommunikationseinrichtung das Datenpaket bekannt ist und zudem dem ersten Verkehrsteilnehmer zugeordnet werden kann. Enthält das Datenpaket beispielsweise die Position des ersten Verkehrsteilnehmers oder einen vergleichbaren Datensatz, so kann ein Profil des ersten Verkehrsteilnehmers, insbesondere ein Bewegungsprofil, von der zentralen Kommunikationseinrichtung erstellt werden. Ein derartiges Profil beziehungsweise Bewegungsprofil kann nun auf unzulässige Art und Weise, insbesondere auf nicht mit dem Datenschutz zu vereinbarende Art und Weise, genutzt werden.

Um dies zu verhindern, soll das Datenpaket gemeinsam mit dem Schlüssel an die zentrale Kommunikationseinrichtung übermittelt werden. Der Schlüssel ist wechselnd ausgeführt und lässt insoweit keinen Rückschluss auf den ersten Verkehrsteilnehmer zu. Bevorzugt wird jedes von dem ersten Verkehrsteilnehmer an die zentrale Kommunikationseinrichtung übermittelte Datenpaket mit einem Schlüssel versehen, welcher von zumindest dem zuletzt von dem ersten Verkehrsteilnehmer verwendeten Schlüssel verschieden ist. Besonders bevorzugt ist der Schlüssel zumindest verschieden von jedem der während einer bestimmten, unmittelbar zuvor liegenden Zeitspanne verwendeten Schlüsseln. Ganz besonders bevorzugt kann der Schlüssel verschieden von allen zuvor von dem ersten Verkehrsteilnehmer verwendeten Schlüsseln gewählt sein. Auf diese Art und Weise wird zwar das Datenpaket an die zentrale Kommunikationseinrichtung übermittelt, diese kann das Datenpaket jedoch nicht in Bezug zu dem ersten Verkehrsteilnehmer setzen.

Insgesamt verfügt somit die zentrale Kommunikationseinrichtung über eine Vielzahl von Datenpaketen. Auch bei einer Auswertung kann jedoch lediglich auf das Vorliegen eines Kraftfahrzeugs, beispielsweise an einer bestimmten Position, geschlossen werden. Es kann jedoch kein Verlauf, beispielsweise Positionsverlauf, über der Zeit ermittelt und ausgewertet werden.

Gleichzeitig ist es jedoch immer noch notwendig, dem wenigstens einen zweiten Verkehrsteilnehmer das Datenpaket zuverlässig zu übermitteln und dem ersten Verkehrsteilnehmer eindeutig zuzuordnen. Zu diesem Zweck ist der Schlüssel vorgesehen. Dieser wird zusammen mit dem Identifikator, welcher vorzugsweise den ersten Verkehrsteilnehmer eindeutig identifiziert, also über der Zeit gesehen konstant ist, von dem ersten Verkehrsteilnehmer an den zweiten Verkehrsteilnehmer übermittelt. Letzterer verfügt mithin über die Kombination aus Identifikator und Schlüssel. Entsprechend kann der erste Verkehrsteilnehmer, insbesondere jeder zweite Verkehrsteilnehmer, eine Kommunikationsverbindung zu der zentralen Kommunikationseinrichtung aufbauen und mithilfe des Schlüssels das Datenpaket des ersten Verkehrsteilnehmers anfordern.

Das bedeutet, dass der zweite Verkehrsteilnehmer den Schlüssel an die zentrale Kommunikationseinrichtung zusammen mit einer Anfrage nach dem entsprechenden Datenpaket übermittelt. Nachfolgend ermittelt die zentrale Kommunikationseinrichtung das Datenpaket, welches dem Schlüssel zugeordnet ist, und übermittelt es an den zweiten Verkehrsteilnehmer, beispielsweise mithilfe einer entsprechenden Datenbank. Der zweite Verkehrsteilnehmer kann nun das Datenpaket dem ersten Verkehrsteilnehmer zuordnen, weil er - wie bereits erläutert - neben dem Schlüssel über den Identifikator verfügt. Der Identifikator kann beispielsweise konstant und eindeutig gewählt sein. Besonders vorteilhaft ist jeder Identifikator lediglich einmalig vergeben und ist dem ersten Verkehrsteilnehmer fest zugeordnet. Dieser ist also anhand des Identifikators beispielsweise weltweit eindeutig zu identifizieren.

Der Schlüssel wird dagegen derart gewählt, dass auch bei einer großen Anzahl an ersten Verkehrsteilnehmern, die mit der zentralen Kommunikationseinrichtung in Kommunikationsverbindung stehen, keine Überschneidung der von den ersten Verkehrsteilnehmern verwendeten Schlüsseln auftreten kann. Zu diesem Zweck weist der Schlüssel vorzugsweise eine entsprechende Länge auf, insbesondere wenigstens 32 Bit, wenigstens 64 Bit oder wenigstens 128 Bit. Beispielsweise wird der Schlüssel ermittelt, indem ein wechselnder Wert mit dem Identifikator als Salt kombiniert und aus der Kombination beider Größen mithilfe einer Hashfunktion der Schlüssel bestimmt wird.

Zusätzlich oder alternativ kann auch vorgesehen sein, dass ein Schlüssel auf beliebige Art und Weise ermittelt wird, beispielsweise zufällig, und zunächst im Rahmen einer Kollisionsanfrage an die zentrale Kommunikationseinrichtung übermittelt wird. Diese prüft nun, ob der Schlüssel bereits in Verwendung ist und antwortet dem ersten Verkehrsteilnehmer entsprechend. Bei einer Antwort, die einem bereits vergebenen Schlüssel entspricht, wählt der erste Verkehrsteilnehmer einen neuen, von dem zuvor gewählten Schlüssel verschiedenen Schlüssel. Anschließend beginnt das Verfahren von neuem. Bei einer Antwort, die darauf hindeutet, dass der Schlüssel nicht in Verwendung ist, wird der Schlüssel gemeinsam mit dem Datenpaket von dem ersten Verkehrsteilnehmer an die zentrale Kommunikationseinrichtung übermittelt.

Die zentrale Kommunikationseinrichtung ist dabei vorzugsweise derart ausgestaltet, dass sie eine Datenbank aufweist, in welcher jeder Schlüssel und das dazugehörige Datenpaket hinterlegt ist. Besonders bevorzugt wird zudem eine Gültigkeitsdauer mit dem Schlüssel verknüpft. Diese Gültigkeitsdauer beginnt mit dem Übermitteln des Datenpakets und des Schlüssels an die zentrale Kommunikationseinrichtung. Nach Ablauf der Gültigkeitsdauer werden Schlüssel und Datenpaket gelöscht, beispielsweise aus der Datenbank. Mithin steht der Schlüssel zur erneuten Verwendung zur Verfügung. Selbstverständlich kann das mit dem Schlüssel verknüpfte Datenpaket von der zentralen Kommunikationseinrichtung auch weiterhin gespeichert werden, insbesondere zur statistischen Auswertung.

Mithilfe des vorstehend beschriebenen Kommunikationsverfahrens lässt sich die Effizienz der Kommunikationsverbindung deutlich erhöhen, insbesondere weil die vorzugsweise unterschiedlichen Kommunikationswege zwischen dem ersten Verkehrsteilnehmer und dem zweiten Verkehrsteilnehmer einerseits sowie dem ersten Verkehrsteilnehmer und der zentralen Kommunikationseinrichtung andererseits auf vorteilhafte Art und Weise genutzt werden. Die Datenübertragung zwischen dem ersten Verkehrsteilnehmer und dem zweiten Verkehrsteilnehmer, zwischen dem ersten Verkehrsteilnehmer und der zentralen Kommunikationseinrichtung und/oder zwischen der zentralen Kommunikationseinrichtung und dem zweiten Verkehrsteilnehmer kann verschlüsselt oder unverschlüsselt erfolgen.

In einer vorteilhaften Ausgestaltung der Erfindung ist vorgesehen, dass der Schlüssel zufällig oder in bestimmten Zeitabständen gewechselt wird. Wie bereits vorstehend erläutert, kann der Schlüssel selbstverständlich für jedes Datenpaket unterschiedlich gewählt sein. Alternativ kann er jedoch auch zufällig gewechselt werden, sodass beispielsweise nach Ablauf einer zufälligen Zeitspanne ein neuer Schlüssel erzeugt wird. Alternativ kann der Schlüssel jeweils lediglich in den bestimmten Zeitabständen gültig sein und für aufeinanderfolgende Zeitabstände, insbesondere unmittelbar aufeinanderfolgende Zeitabstände, unterschiedlich gewählt werden.

Eine Weiterbildung der Erfindung sieht vor, dass das Datenpaket wenigstens einen Datensatz, insbesondere einen Zeitstempel, zumindest eine Betriebsgröße und/oder die Position des ersten Verkehrsteilnehmers, aufweist. Das Datenpaket umfasst den einen Datensatz beziehungsweise mehrere derartiger Datensätze. Jeder Datensatz weist beispielsweise die Betriebsgröße und/oder die Position des ersten Verkehrsteilnehmers auf. Zusätzlich kann dem Datensatz der Zeitstempel zugeordnet sein, welcher den Zeitpunkt des Vorliegens der Betriebsgröße beziehungsweise der Position bezeichnet. Auf diese Art und Weise kann auch bei asynchroner Übermittlung des Datenpakets von dem ersten Verkehrsteilnehmer an die zentrale Kommunikationseinrichtung der Zeitpunkt, zu welchem die Betriebsgröße beziehungsweise die Position vorlag, genau ermittelt werden.

Der Zeitstempel wird beispielsweise mit einer Zeiterfassungseinrichtung ermittelt, welche mit einer Zeiterfassungseinrichtung der zentralen Kommunikationseinrichtung synchronisiert ist. Die Betriebsgröße ist beispielsweise eine Zustandsgröße des ersten Verkehrsteilnehmers, also insbesondere die Position, die Geschwindigkeit, die Fahrtrichtung, und dergleichen. Sie kann jedoch auch eine Aussage über andere Größen des ersten Verkehrsteilnehmers liefern.

Eine weitere vorteilhafte Ausgestaltung der Erfindung sieht vor, dass die zentrale Kommunikationseinrichtung den Datensatz, insbesondere die Betriebsgröße, auswertet und ein dabei erhaltenes Auswertungsergebnis dem wenigstens einen zweiten Verkehrsteilnehmer, insbesondere zusammen mit dem Datenpaket, übermittelt. Auch wenn die zentrale Kommunikationseinrichtung nicht über den Identifikator verfügt und mithin den Datensatz nicht dem ersten Verkehrsteilnehmer zuordnen kann, so kann dennoch eine Auswertung des Datensatzes vorgenommen werden. Dies ist insbesondere dann der Fall, wenn der Datensatz die Betriebsgröße, beispielsweise die Position oder die Geschwindigkeit des ersten Verkehrsteilnehmers, aufweist. So kann aus der Position beziehungsweise der Geschwindigkeit auf eine Verkehrsdichte im Bereich der ebenfalls übermittelten Position geschlossen werden.

Beispielsweise kann die zentrale Kommunikationseinrichtung alle ihr von mehreren ersten Verkehrsteilnehmern übermittelten Datenpakete auf diese Art und Weise auswerten und so eine umfassende Auswertung der Verkehrsdichte über die Positionen der mehreren ersten Verkehrsteilnehmer vornehmen. Das Ergebnis dieser Auswertung kann beispielsweise in Form einer Verkehrsdichtenkarte den Verkehrsteilnehmern, also sowohl dem ersten Verkehrsteilnehmer als auch dem wenigstens einen zweiten Verkehrsteilnehmer, zur Verfügung gestellt werden, insbesondere falls diese Information von dem jeweiligen Verkehrsteilnehmer bei der zentralen Kommunikationseinrichtung nachgefragt wird. Das Auswertungsergebnis wird mithin an den zweiten Verkehrsteilnehmer übermittelt. Dies kann besonders effizient zusammen mit dem Datenpaket erfolgen.

Eine weitere vorteilhafte Ausgestaltung der Erfindung sieht vor, dass das Auswerten eine Karteineinpassung umfasst. Die Karteneinpassung wird auch als "map matching" oder Kartenabgleich bezeichnet. Im Rahmen der Karteneinpassung wird die unter Umständen in dem Datensatz enthaltene Position des ersten Verkehrsteilnehmers mit den Ortsinformationen einer digital vorliegenden Karte abgeglichen. Auf diese Art und Weise können beispielsweise Ungenauigkeiten in der übermittelten Position bereinigt werden. Im Rahmen der Karteneinpassung wird somit beispielsweise anhand der übermittelten Position auf die wahrscheinlichen Koordinaten innerhalb der digitalen Karte geschlossen.

Im Idealfall stimmen die Koordinaten und die ermittelte Position überein. Weil jedoch die Bestimmung der Position üblicherweise mit Ungenauigkeiten Verbunden ist und auch die digitale Karte Toleranzen aufweist, kann die Karteneinpassung zur Korrektur der übermittelten Position vorgesehen sein. Die Karteneinpassung wird auf bekannte Art und Weise vorgenommen. Besonders bevorzugt wird die in dem Datenpaket beziehungsweise dem Datensatz enthaltene Position des ersten Verkehrsteilnehmers korrigiert und insoweit die Koordinaten anstelle der Position in das Datenpaket beziehungsweise den Datensatz aufgenommen. Der wenigstens eine zweite Verkehrsteilnehmer erhält somit bei der Übermittlung des Datenpakets bereits die korrigierte Position.

Eine Weiterbildung der Erfindung sieht vor, dass der zweite Verkehrsteilnehmer das dem ersten Verkehrsteilnehmer zugeordnete Datenpaket verwendet, um ein Bewegungsprofil des ersten Verkehrsteilnehmers zu erstellen. Während das Erstellen des Bewegungsprofils durch die zentrale Kommunikationseinrichtung aus Datenschutzgründen üblicherweise nicht zulässig ist, ist sie für den zweiten Verkehrsteilnehmer notwendig, insbesondere um auf angemessene Art und Weise auf den ersten Verkehrsteilnehmer zu reagieren. Beispielsweise wird anhand des Bewegungsprofils, also dem Verlauf der Position des ersten Verkehrsteilnehmers über der Zeit, darauf geschlossen, ob eine Kollisionsgefahr vorliegt und wie groß die Wahrscheinlichkeit einer solchen Kollision ist. Zu diesem Zweck wird beispielsweise anhand des vorliegenden Bewegungsprofils eine Projektion beziehungsweise eine Extrapolierung des erwarteten Positionsverlaufs erstellt.

Die Auswertung des Datenpakets und das Erstellen des Bewegungsprofils durch den zweiten Verkehrsteilnehmer ist insbesondere dann unproblematisch, wenn der erste Verkehrsteilnehmer den Identifikator und den Schlüssel nur dann an den zweiten Verkehrsteilnehmer übermittelt, wenn eine Entfernung zwischen dem ersten Verkehrsteilnehmer und dem zweiten Verkehrsteilnehmer kleiner als eine bestimmte Entfernung ist. Idealerweise wird das Bewegungsprofil des ersten Verkehrsteilnehmers von dem zweiten Verkehrsteilnehmer gelöscht, sobald der Identifikator und der Schlüssel über einen bestimmten Zeitraum nicht mehr empfangen wurden.

Eine weitere Ausgestaltung der Erfindung sieht vor, dass der Schlüssel unmittelbar oder über eine weitere zentrale Kommunikationseinrichtung von dem ersten Verkehrsteilnehmer an den zweiten Verkehrsteilnehmer übermittelt wird. Selbstverständlich ist die erste Variante, bei welcher der Schlüssel unmittelbar zwischen den Verkehrsteilnehmern übermittelt wird, aus Datenschutzgründen besonders vorteilhaft. Unter der unmittelbaren Übermittlung ist dabei zu verstehen, dass keine Zwischenstation in der Datenübertragung, also ein Empfangen und erneutes Aussenden, vorgesehen ist. Vielmehr werden die von dem ersten Verkehrsteilnehmer ausgesendeten Daten in Form des Identifikators und des Schlüssels, unmittelbar von dem zweiten Verkehrsteilnehmer empfangen. Alternativ erfolgt das Übermitteln des Schlüssels lediglich mittelbar, insbesondere über die weitere zentrale Kommunikationseinrichtung.

Weil die weitere zentrale Kommunikationseinrichtung von derjenigen Kommunikationseinrichtung, die über das Datenpaket verfügt, verschieden ist, ist der zentralen Kommunikationseinrichtung das Erstellen eines Bewegungsprofils des ersten Verkehrsteilnehmers weiterhin nicht möglich. Dennoch sind entsprechende Vorkehrungen zu treffen, um den Datenschutz sicherzustellen. Darunter fällt beispielsweise, dass eine Abfrage von Schlüssel, Identifikator und Datenpaket durch den zweiten Verkehrsteilnehmer beschränkt werden, sodass nicht beliebige Stellen an diese Daten gelangen und mithin ein Bewegungsprofil erstellen können. Dies kann beispielsweise dadurch sichergestellt werden, dass die weitere zentrale Kommunikationseinrichtung nur eine bestimmte Anzahl von Anfragen beziehungsweise Anforderungen pro zweitem Verkehrsteilnehmer, insbesondere zusätzlich pro Zeiteinheit, zulässt.

Eine weitere Ausgestaltung der Erfindung sieht vor, dass das Übermitteln von dem ersten Verkehrsteilnehmer an den zweiten Verkehrsteilnehmer über einen ersten Kommunikationsweg und an die zentrale Kommunikationseinrichtung über einen von dem ersten Kommunikationsweg verschiedenen zweiten Kommunikationsweg erfolgt. Die Kommunikationswege zwischen dem ersten Verkehrsteilnehmer und dem zweiten Verkehrsteilnehmer einerseits und dem ersten Verkehrsteilnehmer und der zentralen Kommunikationseinrichtung andererseits sind mithin bevorzugt voneinander verschieden. Insbesondere hat der erste Kommunikationsweg eine geringere Reichweite als der zweite Kommunikationsweg. Vorzugsweise wird der erste Kommunikationsweg über eine Kurzstreckenkommunikationseinrichtung, beispielsweise WLAN-Kommunikationseinrichtung, und/oder der zweite Kommunikationsweg über eine Langstreckenkommunikationseinrichtung, beispielsweise eine Mobilfunkkommunikationseinrichtung, realisiert.

Die Erfindung betrifft weiterhin ein Kommunikationssystem zur Übertragung von Nutzdaten, insbesondere zur Durchführung des vorstehend beschriebenen Kommunikationsverfahrens. Das Kommunikationssystem verfügt über einen ersten Verkehrsteilnehmer, wenigstens einen zweiten Verkehrsteilnehmer sowie eine zentrale Kommunikationseinrichtung. Dabei ist der erste Verkehrsteilnehmer dazu ausgebildet, ein Datenpaket bereitzustellen und an die zentrale Kommunikationseinrichtung zu übermitteln, wobei das Datenpaket einem wechselnden Schlüssel zugeordnet ist, der gemeinsam mit dem Datenpaket übermittelt wird. Weiterhin ist der erste Verkehrsteilnehmer dazu ausgebildet, einen Identifikator zusammen mit dem Schlüssel an den zweiten Verkehrsteilnehmer zu übermitteln. Schließlich soll der zweite Verkehrsteilnehmer dazu ausgebildet sein, von der zentralen Kommunikationseinrichtung unter Verwendung des Schlüssels das diesem zugeordnete Datenpaket anzufordern und dem ersten Verkehrsteilnehmer zuzuordnen. Auf die Vorteile eines derartigen Kommunikationssystems beziehungsweise der entsprechenden Vorgehensweise wurde bereits hingewiesen. Das Kommunikationssystem sowie das entsprechende Kommunikationsverfahren können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: ein Kommunikationssystem in einer ersten Ausführungsform, und
- Figur 2: das Kommunikationssystem in einer zweiten Ausführungsform.

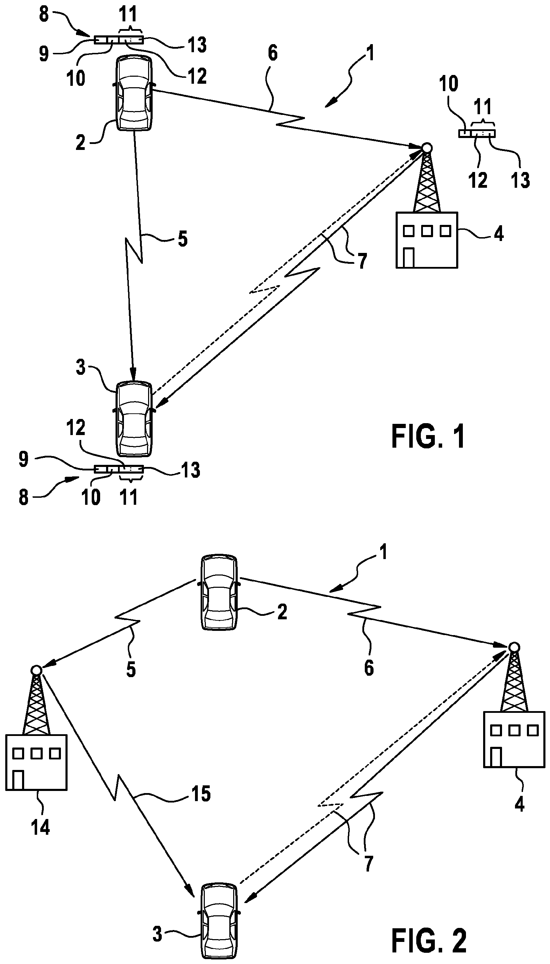

Die Figur 1 zeigt ein Kommunikationssystem 1 in einer ersten Ausführungsform. Das Kommunikationssystem 1 weist einen ersten Verkehrsteilnehmer 2, beispielsweise ein Kraftfahrzeug, wenigstens einen zweiten Verkehrsteilnehmer 3, beispielsweise ebenfalls ein Kraftfahrzeug, sowie eine zentrale Kommunikationseinrichtung 4 auf. Das Kommunikationssystem 1 dient nun dem Übertragen von Nutzdaten zwischen den Verkehrsteilnehmern 2 und 3 sowie der Kommunikationseinrichtung 4. Zu diesem Zweck liegt zwischen dem ersten Verkehrsteilnehmer 2 und dem zweiten Verkehrsteilnehmer 3 ein erster Kommunikationsweg 5 vor, während der erste Verkehrsteilnehmer 2 mit der zentralen Kommunikationseinrichtung 4 über einen zweiten Kommunikationsweg 6 kommunizieren kann. Ein dritter Kommunikationsweg 7 liegt zwischen dem zweiten Verkehrsteilnehmer 3 und der zentralen Kommunikationseinrichtung 4 vor. Die Kommunikationswege 5 und 6 sind in dem hier dargestellten Ausführungsbeispiel unidirektional, während der dritte Kommunikationsweg 7 bidirektional ist. Selbstverständlich kann jedoch der erste Verkehrsteilnehmer 2 gleichzeitig als zweiter Verkehrsteilnehmer 3 auftreten, sodass insbesondere in diesem Fall die Kommunikationswege 5 und 6 ebenfalls bidirektional sein können.

Der erste Verkehrsteilnehmer 2 stellt nun Daten 8 zusammen, welche lediglich beispielhaft dargestellt sind. Die Daten 8 bestehen aus einem Identifikator 9, einem Schlüssel 10 sowie Nutzdaten in Form eines Datenpakets 11. In dem Datenpaket 11 liegt beispielsweise ein Datensatz vor, welcher aus einem Zeitstempel 12 und der momentanen Position 13 des ersten Verkehrsteilnehmers 2 besteht. Das Datenpaket 11 ist dabei dem Schlüssel 10 zugeordnet, welcher zumindest von Zeit zu Zeit wechselt. Es kann auch vorgesehen sein, dass jedem neuen Datenpaket 11 ein neuer Schlüssel zugeordnet wird. Während der Schlüssel 10 also wechselt, ist der Identifikator 9 konstant und vorzugsweise eindeutig dem ersten Verkehrsteilnehmer 2 zugeordnet. Der Schlüssel 10 mit dem ihm zugeordneten Datenpaket 11 wird nun über den zweiten Kommunikationsweg 6 an die zentrale Kommunikationseinrichtung 4 übermittelt. In einer bevorzugten Ausgestaltung gilt dies nicht für den Identifikator 9, dieser wird also nicht der zentralen Kommunikationseinrichtung 4 über den zweiten Kommunikationsweg 6 zur Verfügung gestellt.

Zusätzlich wird nun der Schlüssel 10 zusammen mit dem Identifikator 9 über den ersten Kommunikationsweg 5 an den zweiten Verkehrsteilnehmer 3 übermittelt. Während in der zentralen Kommunikationseinrichtung 4 also der Schlüssel 10 und das Datenpaket 11 vorliegen, verfügt der zweite Verkehrsteilnehmer 3 über den Schlüssel 10 sowie den Identifikator 9. Es ist nun vorgesehen, dass der zweite Verkehrsteilnehmer 3 das Datenpaket 11 bei der zentralen Kommunikationseinrichtung 4 anfordert. Das Datenpaket 11 wird also nicht über den ersten Kommunikationsweg 5, sondern vielmehr über den dritten Kommunikationsweg 7 übermittelt. Zu diesem Zweck dient der Schlüssel, welcher das Datenpaket 11 vorzugsweise eindeutig identifiziert.

Über den dritten Kommunikationsweg 7 wird der Schlüssel 10 der zentralen Kommunikationseinrichtung 4 zur Verfügung gestellt und gleichzeitig das mit diesem verknüpfte Datenpaket 11 angefordert. Die zentrale Kommunikationseinrichtung 4 ermittelt nun das zu dem Schlüssel 10 passende Datenpaket 11 und übermittelt dieses wiederum über den dritten Kommunikationsweg 7 an den zweiten Verkehrsteilnehmer 3. Dieser kann nun das Datenpaket 11 eindeutig dem ersten Verkehrsteilnehmer 2 zuordnen, weil er über den Identifikator 9, den Schlüssel 10 sowie das Datenpaket 11 verfügt. Anhand der Daten 8 kann der zweite Verkehrsteilnehmer 3 ein Bewegungsprofil des ersten Verkehrsteilnehmers 2 erstellen und beispielsweise für eine Fahrerassistenzeinrichtung, insbesondere eine Kollisionserkennung oder dergleichen, nutzen.

Die Figur 2 zeigt eine zweite Ausführungsform des Kommunikationssystems 1. Hier sind nun wiederum der erste Verkehrsteilnehmer 2, der zweite Verkehrsteilnehmer 3 sowie die zentrale Kommunikationseinrichtung 4 vorgesehen. Insoweit wird auf die vorstehenden Ausführungen verwiesen. Zusätzlich liegt nun jedoch eine weitere zentrale Kommunikationseinrichtung 14 vor. Der erste Kommunikationsweg 5 ist zwischen dem ersten Verkehrsteilnehmer 2 und dieser weiteren zentralen Kommunikationseinrichtung 14 vorgesehen. Ein beispielsweise analog zu dem ersten Kommunikationsweg 5 ausgebildeter vierter Kommunikationsweg 15 liegt zwischen der Kommunikationseinrichtung 14 und dem zweiten Verkehrsteilnehmer 3 vor. Hinsichtlich der Übertragung des Schlüssels 10 sowie des Datenpakets 11 von dem ersten Verkehrsteilnehmer 2 an die zentrale Kommunikationseinrichtung 4 wird auf Vorstehendes verwiesen. Ebenso ändert sich nichts an der Anforderung des Datenpakets 11 bei der Kommunikationseinrichtung 4 durch den zweiten Verkehrsteilnehmer 3 unter Verwendung des Schlüssels 10.

Der Unterschied zu der vorstehend beschriebenen ersten Ausführungsform liegt darin, dass der Identifikator 9 zusammen mit dem Schlüssel 10 nicht unmittelbar von dem ersten Verkehrsteilnehmer 2 an den zweiten Verkehrsteilnehmer 3 übermittelt wird. Vielmehr ist diese Übermittlung lediglich mittelbar, nämlich über die weitere Kommunikationseinrichtung 14 realisiert. Das bedeutet, dass der Identifikator 9 sowie der Schlüssel 10 über den ersten Kommunikationsweg 5 von dem ersten Verkehrsteilnehmer 2 an die weitere zentrale Kommunikationseinrichtung 14 übermittelt werden. Anschließend übermittelt diese den Identifikator 9 und den Schlüssel 10 an den zweiten Verkehrsteilnehmer 3. Selbstverständlich kann es vorgesehen sein, dass die Kommunikationseinrichtung 14 der Kommunikationseinrichtung 4 entspricht oder zumindest einen Bestandteil von dieser bildet. Besonders bevorzugt liegt sie jedoch separat von der Kommunikationseinrichtung 4 vor.

Beispielsweise werden die Kommunikationswege 5 und 15 über eine Kurzstreckenkommunikationseinrichtung hergestellt, während die Kommunikationswege 6 und 7 vorzugsweise über eine Langstreckenkommunikationseinrichtung realisiert sind.

## Patentansprüche

1. Kommunikationsverfahren zum Übertragen von Nutzdaten zwischen einem ersten Verkehrsteilnehmer (2), wenigstens einem zweiten Verkehrsteilnehmer (3) sowie einer zentralen Kommunikationseinrichtung (4), **dadurch gekennzeichnet, dass** der erste Verkehrsteilnehmer (2) ein Datenpaket (11) bereitstellt und an die zentrale Kommunikationseinrichtung (4) übermittelt, wobei das Datenpaket (11) einem wechselnden Schlüssel (10) zugeordnet ist, der gemeinsam mit dem Datenpaket (11) übermittelt wird, dass der erste Verkehrsteilnehmer (2) einen Identifikator (9) zusammen mit dem Schlüssel (10) an den zweiten Verkehrsteilnehmer (3) übermittelt, und dass der zweite Verkehrsteilnehmer (3) von der zentralen Kommunikationseinrichtung (4) unter Verwendung des Schlüssels (10) das diesem zugeordnete Datenpaket (11) anfordert und dem ersten Verkehrsteilnehmer (2) zuordnet.

2. Kommunikationsverfahren nach Anspruch 1, **dadurch gekennzeichnet, dass** der Schlüssel (10) zufällig oder in bestimmten Zeitabständen gewechselt wird.

3. Kommunikationsverfahren nach einem der vorhergehenden Ansprüche, **dadurch gekennzeichnet, dass** das Datenpaket (11) wenigstens einen Datensatz, insbesondere einen Zeitstempel (12) und zumindest eine Betriebsgröße und/oder die Position (13) des ersten Verkehrsteilnehmers (2), aufweist.

4. Kommunikationsverfahren nach einem der vorhergehenden Ansprüche, **dadurch gekennzeichnet, dass** die zentrale Kommunikationseinrichtung (4) den Datensatz, insbesondere die Betriebsgröße und/oder die Position (13) auswertet und ein dabei erhaltenes Auswertungsergebnis dem wenigstens einem zweiten Verkehrsteilnehmer (3), insbesondere zusammen mit dem Datenpaket (11) übermittelt.

5. Kommunikationsverfahren nach einem der vorhergehenden Ansprüche, **dadurch gekennzeichnet, dass** das Auswerten eine Karteneinpassung umfasst.

6. Kommunikationsverfahren nach einem der vorhergehenden Ansprüche, **dadurch gekennzeichnet, dass** der zweite Verkehrsteilnehmer (3) das dem ersten Verkehrsteilnehmer (2) zugeordnete Datenpaket (11) verwendet, um ein Bewegungsprofil des ersten Verkehrsteilnehmers (2) zu erstellen.

7. Kommunikationsverfahren nach einem der vorhergehenden Ansprüche, **dadurch gekennzeichnet, dass** der Identifikator (9) unmittelbar oder über eine weitere zentrale Kommunikationseinrichtung (14) von dem ersten Verkehrsteilnehmer (2) an den zweiten Verkehrsteilnehmer (3) übermittelt wird.

8. Kommunikationsverfahren nach einem der vorhergehenden Ansprüche, **dadurch gekennzeichnet, dass** das Übermitteln von dem ersten Verkehrsteilnehmer (2) an den zweiten Verkehrsteilnehmer (3) über einen ersten Kommunikationsweg (5) und an die zentrale Kommunikationseinrichtung (4) über einen von dem ersten Kommunikationsweg (5) verschiedenen zweiten Kommunikationsweg (6) erfolgt.

9. Kommunikationsverfahren nach einem der vorhergehenden Ansprüche, **dadurch gekennzeichnet, dass** der erste Kommunikationsweg (5) über eine Kurzstreckenkommunikationseinrichtung und der zweite Kommunikationsweg (6) über eine Langstreckenkommunikationseinrichtung hergestellt wird.

10. Kommunikationssystem (1) zur Übertragung von Nutzdaten, insbesondere zur Durchführung des Kommunikationsverfahrens nach einem oder mehreren der vorhergehenden Ansprüche, mit einem ersten Verkehrsteilnehmer (2), wenigstens einem zweiten Verkehrsteilnehmer (3) sowie einer zentralen Kommunikationseinrichtung (4), **dadurch gekennzeichnet, dass** der erste Verkehrsteilnehmer (2) dazu ausgebildet ist, ein Datenpaket (11) bereitzustellen und an die zentrale Kommunikationseinrichtung (4) zu übermitteln, wobei das Datenpaket (11) einem wechselnden Schlüssel (10) zugeordnet ist, der gemeinsam mit dem Datenpaket (11) übermittelt wird, dass der erste Verkehrsteilnehmer (2) dazu ausgebildet ist, einen Identifikator (9) zusammen mit dem Schlüssel (10) an den zweiten Verkehrsteilnehmer (3) zu übermitteln, und dass der zweite Verkehrsteilnehmer (3) dazu ausgebildet ist, von der zentralen Kommunikationseinrichtung (4) unter Verwendung des Schlüssels (10) das diesem zugeordnete Datenpaket (11) anzufordern und dem ersten Verkehrsteilnehmer (2) zuzuordnen.

## Claims

1. Communication method for transmitting useful data between a first road user (2), at least one second road user (3) and a central communication device (4), **characterized in that** the first road user (2) provides a data packet (11) and transmits it to the central communication device (4), wherein the data packet (11) is associated with a changing key (10) that is transmitted together with the data packet (11), **in that** the first road user (2) transmits an identifier (9) together with the key (10) to the second road user (3), and **in that** the second road user (3) requests from the central communication device (4), using the key (10), the data packet (11) associated with the latter and assigns it to the first road user (2).

2. Communication method according to Claim 1, **characterized in that** the key (10) is changed randomly or at particular intervals of time.

3. Communication method according to either of the preceding claims, **characterized in that** the data packet (11) has at least one data record, particularly a time stamp (12) and at least one operating variable and/or the position (13) of the first road user (2).

4. Communication method according to one of the preceding claims, **characterized in that** the central communication device (4) evaluates the data record, particularly the operating variable and/or the position (13), and transmits an evaluation result obtained in the process to the at least one second road user (3), particularly together with the data packet (11).

5. Communication method according to one of the preceding claims, **characterized in that** the evaluation comprises a map adaptation.

6. Communication method according to one of the preceding claims, **characterized in that** the second road user (3) uses the data packet (11) associated with the first road user (2) to create a movement profile for the first road user (2).

7. Communication method according to one of the preceding claims, **characterized in that** the identifier (9) is transmitted from the first road user (2) to the second road user (3) directly or via a further central communication device (14).

8. Communication method according to one of the preceding claims, **characterized in that** the transmission from the first road user (2) to the second road user (3) is effected via a first communication path (5) and a transmission from the first road user to the central communication device (4) is effected via a second communication path (6), which is different from the first communication path (5).

9. Communication method according to one of the preceding claims, **characterized in that** the first communication path (5) is set up via a short-haul communication device and the second communication path (6) is set up via a long-haul communication device.

10. Communication system (1) for transmitting useful data, particularly for performing the communication method according to one or more of the preceding claims, having a first road user (2), at least one second road user (3) and a central communication device (4), **characterized in that** the first road user (2) is designed to provide a data packet (11) and to transmit it to the central communication device (4), wherein the data packet (11) is associated with a changing key (10) that is transmitted together with the data packet (11), **in that** the first road user (2) is designed to transmit an identifier (9) together with the key (10) to the second road user (3), and **in that** the second road user (3) is designed to request from the central communication device (4), using the key (10), the data packet (11) associated with the latter and to assign it to the first road user (2).

## Revendications

1. Procédé de communication destiné à transmettre des données utiles entre un premier participant au trafic (2), au moins un deuxième participant au trafic (3), ainsi qu'un système de communication (4) centralisé, **caractérisé en ce que** le premier participant au trafic (2) met à disposition un paquet de données (11) et le transmet au système de communication (4) centralisé, le paquet de données (11) étant associé à une clé (10) changeante qui est transmise en commun avec le paquet de données (11), **en ce que** le premier participant au trafic (2) transmet un identificateur (9), en commun avec la clé (10) au deuxième participant au trafic (3) et **en ce que** le deuxième participant au trafic (3) exige du système de communication (4) centralisé en utilisant la clé (10) le paquet de données (11) qui lui est associé et l'associe au premier participant au trafic (2).

2. Procédé de communication selon la revendication 1, **caractérisé en ce que** la clé (10) change de manière aléatoire ou à des intervalles de temps définis.

3. Procédé de communication selon l'une quelconque des revendications précédentes, **caractérisé en ce que** le paquet de données (11) contient au moins un ensemble de données, notamment un horodateur (12) et comporte au moins une grandeur de service et/ou la position (13) du premier participant au trafic (2).

4. Procédé de communication selon l'une quelconque des revendications précédentes, **caractérisé en ce que** le système de communication (4) centralisé évalue l'ensemble de données, notamment la grandeur de service et/ou la position (13) et transmet un résultat d'évaluation obtenu à cet effet à l'au moins un deuxième participant au trafic (3), notamment en commun avec le paquet de données (11).

5. Procédé de communication selon l'une quelconque des revendications précédentes, **caractérisé en ce que** l'évaluation comprend une adaptation de carte.

6. Procédé de communication selon l'une quelconque des revendications précédentes, **caractérisé en ce que** le deuxième participant au trafic (3) utilise le paquet de données (11) associé au premier participant au trafic (2) pour établir un profil de déplacement du premier participant au trafic (2).

7. Procédé de communication selon l'une quelconque des revendications précédentes, **caractérisé en ce que** l'identificateur (9) est transmis directement ou via un système de communication (14) centralisé supplémentaire par le premier participant au trafic (2) au deuxième participant au trafic (3).

8. Procédé de communication selon l'une quelconque des revendications précédentes, **caractérisé en ce que** la transmission par le premier participant au trafic (2) au deuxième participant au trafic (3) s'effectue via une première voie de communication (5) et au système de communication (4) via une deuxième voie de communication (6) différente de la première voie de communication (5).

9. Procédé de communication selon l'une quelconque des revendications précédentes, **caractérisé en ce que** la première voie de communication (5) est établie par l'intermédiaire d'un système de communication à trajet court et la deuxième voie de communication (6) est établie par l'intermédiaire d'un système de communication à trajet long.

10. Système de communication (1), destiné à transmettre des données utiles, notamment à réaliser le procédé de communication selon l'une quelconque ou plusieurs des revendications précédentes, avec un premier participant au trafic (2), au moins un deuxième participant au trafic (3), ainsi qu'un système de communication (4) centralisé, **caractérisé en ce que** le premier participant au trafic (2) est conçu pour mettre à disposition un paquet de données (11) et le transmettre au système de communication (4) centralisé, le paquet de données (11) étant associé à une clé (10) changeante, qui est transmise en commun avec le paquet de données (11), **en ce que** le premier participant au trafic (2) est conçu pour transmettre au deuxième participant au trafic (3) un identificateur (9), en commun avec la clé (10) et **en ce que** le deuxième participant au trafic (3) est conçu pour exiger de la part du système de communication (4) centralisé, en utilisant la clé (10) le paquet de données (11) qui lui est associé et pour l'associer au premier participant au trafic (2).
